# EUROPEAN PATENT SPECIFICATION

(11) **EP 2 587 635 B1**
(45) Date of publication and mention of the grant of the patent: **04.12.2019**
(21) Application number: 12190093.0
(22) Date of filing: 26.10.2012
(51) Int. Cl.: H02K 15/00, H02K 15/12, H02K 1/18, H02K 3/30, H02K 3/38

(54) **Motor and motor manufacturing method**
Motor und Herstellungsverfahren dafür
Moteur et son procédé de fabrication

(30) Priority: 27.10.2011 JP 2011235855
(43) Date of publication of application: 01.05.2013
(73) Proprietor: Kobelco Construction Machinery Co., Ltd., Hiroshima 731-5161 (JP)
(72) Inventor: Saiki, Seiji, Hiroshima-shi,, Hiroshima 731-5161 (JP); Koiwai, Kazushige, Hiroshima-shi,, Hiroshima 731-5161 (JP); Nakazumi, Akira, Hiroshima-shi,, Hiroshima 731-5161 (JP)
(74) Representative: TBK

(56) References cited:
- WO-A2-2008/007052
- JP-A- H0 670 497
- JP-A- H02 237 445
- JP-A- S61 147 750
- US-A1- 2004 194 287

## Description

### Background of the Invention

### Field of the Invention

The present invention relates to a method of manufacturing a motor including a stator and a sealing body that seals all or a part of the stator.

### Description of the Background Art

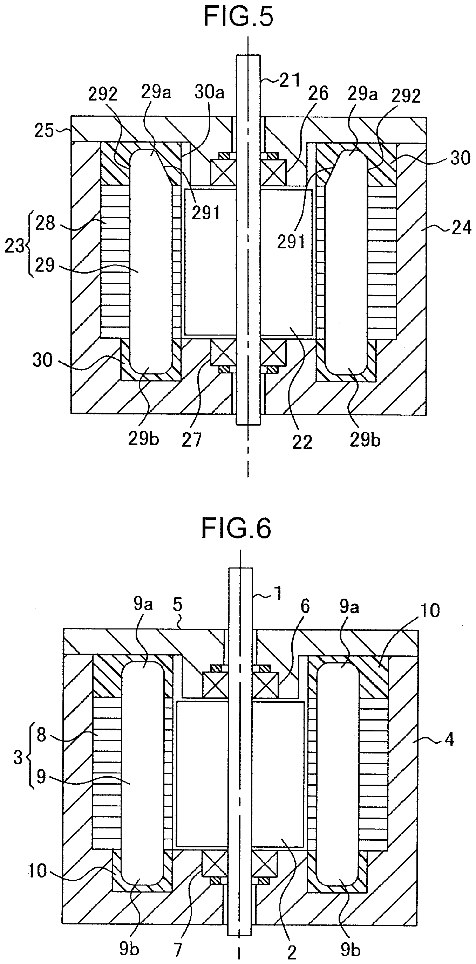

A typical motor is shown in Fig. 6. The motor includes a motor shaft 1, a rotor 2 that rotates about the motor shaft 1, a stator 3 disposed around the rotor 2, a casing 4 that accommodates the rotor 2 and the stator 3, and a cover 5 attached to one of opposite axial end portions of the casing 4. Fig. 6 shows an example of a motor, such as a slewing motor of a shovel, the motor disposed in such a vertical attitude that the motor shaft 1 vertically extends. In this attitude, the casing 4 is shaped to open upward, and the cover 5 is attached to the casing 4 so as to close an upper side opening of the casing 4.

Note that in this specification, the term "motor" intends to include a power generator and a generator motor that operate on substantially identical principles to a motor.

The cover 5 is attached to an upper end surface of the casing 4 by a bolt, not shown in the drawing, and rotatably supports an upper portion of the motor shaft 1, via a bearing 6. A lower portion of the motor shaft 1, meanwhile, is rotatably supported by a lower portion of the casing 4, via a bearing 7.

The stator 3 includes a stator core 8 constituted by laminated electromagnetic steel sheets, and a stator coil 9 wound around the stator core 8 in an up-down direction, that is, in the axial direction of the motor shaft 1 (also referred to as a motor axis direction hereafter). The stator coil 9 includes first and second coil ends 9a, 9b serving as turned back parts on respective axial direction sides, that is, upper and lower sides, and is wound so as to cause the coil ends 9a, 9b to project beyond respective axial end surfaces of the stator core 8 straightly in the motor axis direction.

Moreover, in this motor, the entire stator 3 or a part of the stator 3, the part including the coil ends 9a, 9b, is covered with a sealing body 10. The sealing body 10 is formed of a sealant (typically a synthetic resin, such as unsaturated polyester, which has an electric insulation property and a heat transmission property) injected from the upper side first coil end 9a side and charged (see Japanese Patent Application Publication JP 2002-125337 A).

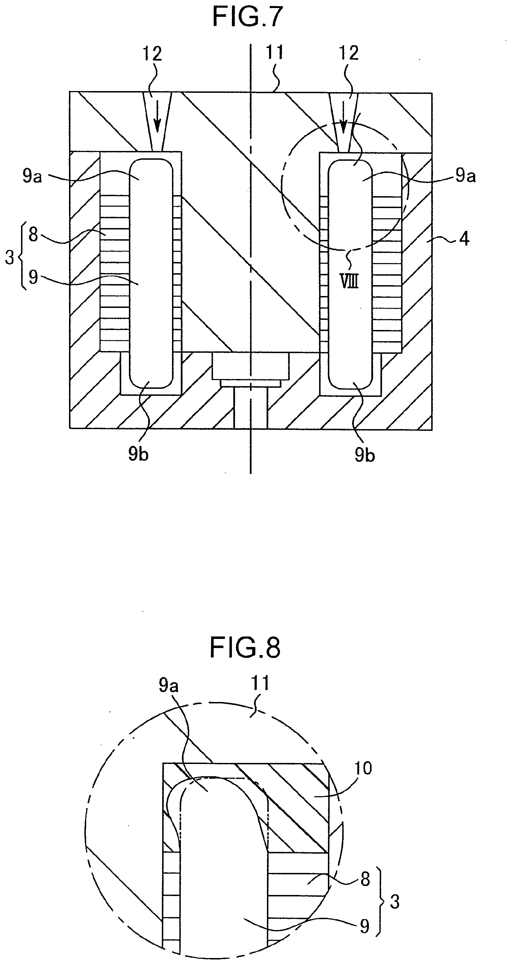

Figs. 7 and 8 show a sealing step of injecting the sealant, that is, a material of the sealing body 10, in a molten state. In the sealing step, the stator 3 is inserted into the casing 4, following a coil winding step of winding the stator coil 9 around the stator core 8. The casing 4 is used as a receiving mold (a lower mold), on which an injection mold 11 is placed. The injection mold 11 includes a plurality of injection ports 12, through of which the sealant, the material of the sealing body 10, is injected toward an upper surface which is an end surface of the upper side first coil end 9a. The sealant is injected at a fixed pressure so as to reliably infiltrate parts requiring sealing, such as a space between the stator coils.

However, thus injecting the sealant at a fixed injection pressure toward the upper surface of the upper side first coil end 9a has a possibility of deforming the first coil end 9a, which had projected parallel to the axial direction of the motor prior to injection as shown by a dot-dot-dash line in Fig. 8, so as to tilt the first coil end 9a in a radial direction, due to the injection pressure. Because the first coil end 9a is originally wound in an inner side position of the stator 3, as shown in Fig. 6 and therefore a layer thickness of the sealing body 10 on a radially inner side of the first coil end 9a is smaller than the layer thickness thereof on a radially outer side, the sealant injected and cured in a condition where the first coil end 9a is tilted toward an inner peripheral side of the stator 3 due to the injection pressure, as shown by a solid line in Fig. 8, forms the sealing body 10 whose thickness on the inner side of the tilted part of the first coil end 9a gradually decreases. In certain cases, a tip part of the first coil end 9a may be exposed or project from an inner peripheral side surface of the sealant 10. Such local reduction in thickness of the sealing body 10 or such exposure or projection of the first coil end 9a toward the inside surface may cause the sealant 10 to fracture or peel.

US 2004/194287 A1 discloses a motor manufactured as in the preamble of claim 1.

JP S61 147750 A discloses a stator coil which is formed with both the coil end inner surface and the coil end radial outside surface inclined outwardly in a radial direction.

WO 2008/007052 A2 discloses a stator having a stator coil which is inclined at coil end inner surface and is straight at the coil end radial outside surface only at a rather small portion at the coil end. The coil end radial outside surface is formed with a central inclination.

In JP H06 70497 A a stator has a stator coil which is inclined at coil end inner surface and is straight at the coil end radial outside surface. The coil end radial outside surface is formed with a central inclination.

### Summary of the Invention

It is the object of the invention to provide an improved method of manufacturing a motor considering the above discussed problems of local reduction in thickness of a sealing body.

This object is solved by a method of manufacturing a motor having the features of claim 1. Further developments are stated in the dependent claims.

### Brief Description of the Drawings

Fig. 1 is a sectional view of a motor according to an embodiment of the present invention;
Fig. 2 is an enlarged view of a portion II of Fig. 1;
Fig. 3 is a sectional view showing a mold attachment step of providing an inside surface of a first coil end in the motor with an outward inclination;
Fig. 4 is a sectional view showing a sealing step following the mold attachment step;
Fig. 5 is a sectional view of a motor according to a modified example of this embodiment of the present invention;
Fig. 6 is a sectional view of a conventional motor;
Fig. 7 is a sectional view showing a sealing step performed to manufacture the conventional motor; and
Fig. 8 is an enlarged view of a portion VIII of Fig. 7 and a sectional view showing a coil end tilted by the sealing step shown in Fig. 7.

### Description of the Preferred Embodiments

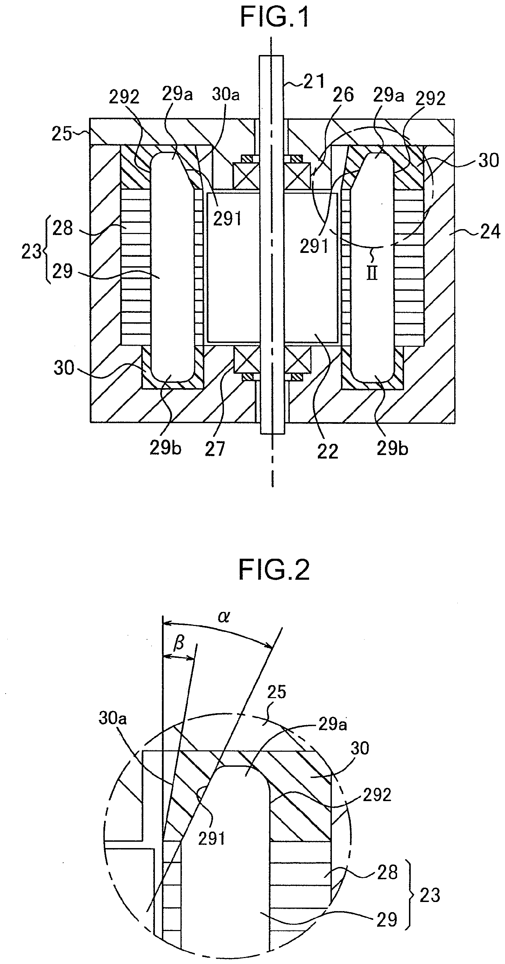

A first embodiment of the present invention will be described by use of Figs. 1 to 5. Similarly to the background art described above, the embodiment is based on an application of the invention to a motor disposed in such a vertical attitude that a motor shaft vertically extends, such as a slewing motor of a shovel.

The motor according to this embodiment includes a motor shaft 21, a rotor 22 that rotates about the motor shaft 21, a stator 23 disposed around the rotor 22, a casing 24 that accommodates the rotor 22 and the stator 23, and a cover 25 attached to one axial direction end, i.e. an upper end in the attitude shown in Fig. 1, of the casing 24. The cover 25 is attached to an upper end surface of the casing 24 with use of a bolt, not shown in the drawing, so as to rotatably support an upper portion, which is one end portion of the motor shaft 21, via a bearing 26. A lower portion, which is the other end portion of the motor shaft 21, is rotatably supported by a lower portion of the casing 24 via a bearing 27.

The stator 23 includes a stator core 28 and a stator coil 29. The stator core 28 is formed of, for example, laminated electromagnetic steel sheets. The stator coil 29 is vertically wound around the stator core 28. In detail, the stator coil 29 includes a first coil end 29a and a second coil end 29b which are respective turned back parts on upper and lower sides, and is wound so that the first and second coil ends 29a, 29b project to respective outer sides in a motor axis direction beyond respective axial direction end surfaces of the stator core 28.

In the casing 24A, there is formed a sealing body 30 for sealing the entire stator 23 or a part thereof, the part including the coil ends 29a, 29b on the respective sides. The sealing body 30 is formed by injecting and charging a sealant typically made of a synthetic resin such as unsaturated polyester having an electric insulation property and a heat transmission property into the casing 24 from a specific end (an upper end in this embodiment) of respective axial direction ends (upper and lower ends in this embodiment) of the casing 24 and curing the thus charged sealant.

As shown in Figs. 1 and 2, in this embodiment, a radially inner side surface (to be referred to simply as an "inside surface" hereafter) 291 of the first coil end 29a, which is a specific coil end on the side of the injection of the sealing body 30 (the upper side), is formed as an oblique surface inclined so as to displace outwardly in a radial direction with close to a tip of the first coil end 29a, while an inside surface 30a of the sealing body 30 covering the first coil end 29a is also inclined so as to displace outwardly in the radial direction with close to the tip of the first coil end 29a. As shown in Fig. 2, the inside surface 291 of the first coil end 29a is inclined, by an angle α, relative to the motor axis direction, while the inside surface 30a of the sealing body 30 is inclined, by an angle β smaller than the angle α, relative to the motor axis direction. The invention is not limited to the presence or absence of an inclination in a radial outside surface 292 of the first coil end 29a or inner and outer side surfaces of the second coil end 29b: in this embodiment, all of these three surfaces are formed to be parallel to the motor axis direction.

The motor is manufactured, for example, by use of a method including a coil winding step, an inclination provision step, a sealing step, and a post-sealing assembly step.

In the coil winding step, the stator coil 29 is wound around the stator core 28 to form the stator 23.

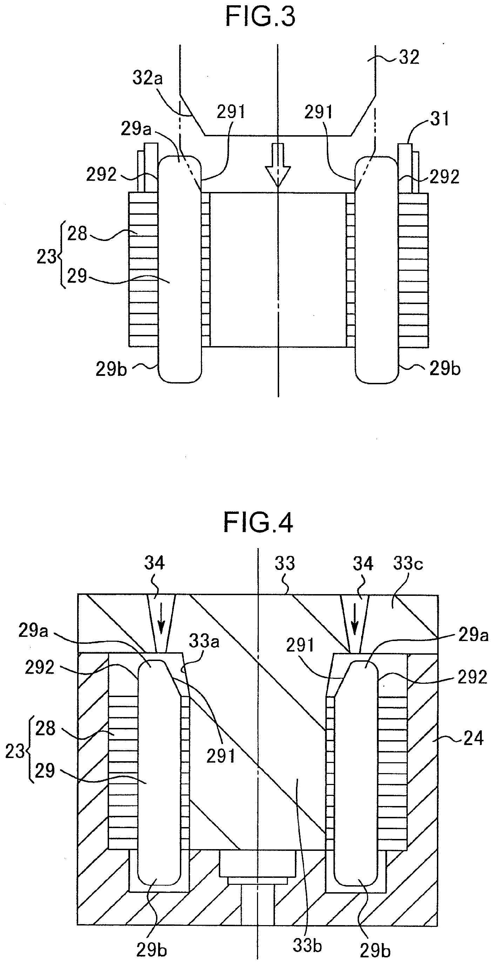

In the inclination provision step, the inside surface 291 of the first coil end 29a of the stator coil 29 wound around the stator core 28 in the coil winding step is provided with such an inclination that the inside surface 291 displaces outwardly in the radial direction with close to the tip of the first coil end 29a. The stator coil 29 immediately after winding, holding sufficient air to be flexible, can be desirably deformed by receiving external force. Hence, it is possible to efficiently provide the inside surface 291 of the first coil end 29a with an inclination by use of an inclination provision jig 32 such as that shown in Fig. 3, for example.

The inclination provision jig 32, specifically, has an oblique outer peripheral surface 32a, on a lower end thereof, the outer peripheral surface 32a inclined so as to be decreased in diameter with close to its lower terminal. The oblique outer peripheral surface 32a of the inclination provision jig 32 is adapted to be pressed into an inside part of the first coil end 29a from above while the outside surface 292 of the first coil end 29a is constrained at an outer side of the stator 23 by a restricting jig 31 to be thereby pressed against the outside surface 292. This provides the inside surface 291 of the first coil end 29a with an inclination conforming to the inclination of the oblique outer peripheral surface 32a while the coil end outside surface 292 is kept substantially vertical state (i.e. parallel to the motor axis direction) as same as in the state immediately after coil winding.

In the sealing step, molten sealant is injected into the casing 24 while the stator 23 where the inside surface 291 of the first coil end 29a is provided with the inclination as described above is accommodated in the casing 24 as shown in Fig. 4. The injection is performed with utilization of the casing 24 as a receiving mold (a lower mold) and further with use of an injection mold 33 as an upper mold. The injection mold 33 includes a columnar insertion portion 33b, which is adapted to be inserted into and fitted with the stator 23, and a cover portion 33c connected to an upper end of the insertion portion 33b and adapted to cover an opening (an upper side opening in Fig. 4) of the casing 24. An outer peripheral surface 33a of an upper end portion of the insertion portion 33b, that is, a portion located on an inner side the first coil end 29a, is inclined so as to be increased in diameter with close to the cover portion 33c. The cover portion 33c is provided with a plurality of injection ports 34 in respective positions opposing the first coil end 29a.

The sealant is injected through the injection ports 34 at a constant injection pressure toward an end surface, that is, an upper surface, of the first coil end 29a. At this time, the outward inclination of the inside surface 291 of the first coil end 29a causes the injection pressure to act on the first coil end 29a as an outward force. Hence, the inside surface 291 of the first coil end 29a is never inwardly tilted while there being a possibility of an increase in the incline angle α thereof. This means that the inside surface 291 of the first coil end 29a is maintained as an outwardly inclined surface even after the sealing step.

The sealant thus having been injected into the casing 24 is cured to form the sealing body 30. The injection mold 33 is thereafter removed to leave the stator 23 and the sealing body 30 covering at least the coil ends 29a, 29b on the respective sides of the stator 23 in the casing 24. The sealing body 30 protects the first and second coil ends 29a, 29b and transmits coil heat, which is heat generated in the stator coil 29, favorably to the casing 24.

Meanwhile, the inner peripheral surface 30a of the part of the sealing body 30, the part covering the first coil end 29a, is provided with an inclination conforming to the inclination of the oblique outer peripheral surface 33a of the injection mold 33. This inclination, which is such one as increases the diameter of the inner peripheral surface 30a with close to the end of the first coil end 29a, as described above, enables the injection mold 33 to be easily removed from the sealing body 30 following the injection of the sealant. In addition, since the inclination forms the incline angle β relative to the motor axis direction, the incline angle β being smaller than the incline angle α of the first coil end inside surface 291 (α > β), there is secured sufficient thickness in the sealing body 30 on the inner side of the first coil end 29a, despite the inclination of the inner peripheral surface 30a. Thus, achieved are both of facilitating the removal of the mold and securing sufficient layer thickness in the sealing body 30 for preventing the sealing body 30 from fracturing or peeling.

In the post-sealing assembly step, the rotor 22 is inserted to the inside of the stator 23 and the sealing body 30, and the cover 25 and motor shaft 21 are attached to the casing 24. The assembly of the motor is thus completed.

In this motor, since the inside surface 291 of a specific coil end, that is, the first coil end 29a on the sealant-injection side (the upper side in the drawings), of the first and second coil ends 29a, 29b is so inclined as to displace outwardly in the radial direction with close to the tip of the first coil end 29a, there are suppressed exposure and projection of the first coil end 29a from the inner peripheral surface of the sealing body 30 and further a local reduction in the layer thickness of the sealing body 30. This makes it possible to prevent the sealant reliably from fracturing and peeling after the cure thereof. Even if the entire first coil end 29a tilts slightly outward in the radial direction to slightly decrease the thickness of the part of the sealing body 30 on the outer side of the stator coil 29, there is little possibility of fracture or peel of the sealant because the thickness of an outer part of the stator core 28 and the sealing body 30 is greater than that of an inner part of the stator coil 29, as shown in Fig. 1.

The present invention is not limited to the embodiment described above, but can include, for example, the following embodiments.

The inclination of the inner peripheral surface 30a of the sealing body 30 is not essential, the inner peripheral surface 30a being permitted to be a cylindrical surface parallel to the motor axis direction. Also in this case, the injection mold 33 can be removed by application of a fixed pressure following the cure of the sealant. Besides, forming the inner peripheral surface 30a as a cylindrical surface enables the part of the sealing body 30, the part covering the inside surface 291 of the first coil end 29a, to be given a greater layer thickness.

As regards the first coil end 29a, only the inside surface 291 thereof may be inclined, or the entire first coil end 29a may be inclined outwardly in the radial direction. The former case allows the processing for providing the inside surface 291 with the inclination to be simplified. The latter case permits the first coil end 29a to be close to an outer periphery of the casing 24 to thereby improve its heat radiation property. The inclination of the entire first coil end 29a can be provided, for example, by use of the method including: disposing the restricting jig 31 shown in Fig. 3 at a location distance outwardly in the radial direction from the coil end 29a; and, similarly to the method described above, pressing the outer peripheral surface 32a of the inclination provision jig 32 against the radial inside surface of the first coil end 29a to deform the entire first coil end 29a outwardly. The inclination angle of the entire first coil end 29a is preferably set within a range free from stress concentration and magnetic field disturbance in the first coil end 29a.

The present invention is not limited to a vertically disposed motor but may be applied similarly to a horizontally disposed motor, or a power generator and a generator motor that operate on identical principles to a motor.

As described above, the present invention provides a method of manufacturing a motor as defined in appended claim 1.

The sealing step of the manufacturing method according to the present invention preferably includes: attaching to the casing an injection mold which includes an insertion adapted to be inserted to an inner side of the stator and a cover portion connected to the insertion portion to cover an opening of the casing, the cover portion provided with an injection port; and injecting the sealant serving as the material of the sealing body through the injection port toward an end surface of the specific coil end, wherein a part of the insertion portion of the injection mold, the part located on an inner side of the specific coil end, has an outer peripheral surface which is inclined, so as to increase in diameter with close to the cover portion, at a smaller angle than an angle of the inclination of the inside surface of the specific coil end. The inclination of the outer peripheral surface of the insertion portion facilitates removal of the injection mold from the casing following injection of the sealant. Furthermore, since the angle of the inclination of the outer peripheral surface is smaller than the angle of the inclination of the inside surface of the specific coil end, there is secured sufficient thickness in a part of the sealing body, the part formed on the inner side thereof, despite the inclination of the outer peripheral surface, which reliably prevents the part from fracturing or peeling.

This application is based on Japanese Patent application No. 2011-235855 filed in Japan Patent Office on October 27, 2011.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined in the appended claims, they should be construed as being included therein.

## Claims

1. A method of manufacturing a motor that includes: a motor shaft (21); a rotor (22) that rotates about the motor shaft (21); a stator (23) disposed around the rotor (22), the stator (23) including a stator core (28) and a stator coil (29) wound around the stator core (28), the stator coil (29) being wound around the stator core (28) in a condition where coil ends (29a, 29b) on respective sides of the stator coil (29), which serve as turned back parts on respective ends thereof, project outwardly in an axial direction beyond respective axial direction end surfaces of the stator core (28); a casing (24) accommodating the rotor (22) and the stator (23); and a sealing body (30) charged into the casing (24) to seal an entirety of the stator (23) or a part of the stator (23) including the coil ends (29a, 29b) on the respective sides,
the method comprising:
a coil winding step of winding the stator coil (29) around the stator core (28);
an inclination provision step of providing a side surface (291) on a radially inner side of the specific coil end (29a) of the coil ends (29a, 29b) on the respective sides of the stator coil (29), following the coil winding step, with such an inclination that the side surface (291) displaces outwardly in a radial direction with close to a tip of a specific coil end (29a); and
an injection step of injecting a sealant which serves as a material of the sealing body (30), from a side of the specific coil end (29a), into the casing in which the stator whose side surface (291) on the radially inner side of the specific coil end (29a) has been provided with the inclination is accommodated,
**characterized in that**
the inclination provision step includes providing only the side surface (291) on the radially inner side of the specific coil end (29a) with the inclination while keeping a side surface (292) on a radially outer side of the specific coil end (29a) parallel to a motor axis direction with no inclination,
wherein the inclination provision step includes using an inclination provision jig (32) including an oblique outer peripheral surface (32a) inclined so as to decrease in diameter with close to a tip of the inclination provision jig (32) to press the oblique outer peripheral surface (32a) against an inner part of the specific coil end (29a) while the side surface (292) of the specific coil end (29a) is constrained at a radially outer side of the stator (23) by a restricting jig (31) pressed against the side surface (292).

2. The motor manufacturing method according to claim 1, wherein the sealing step includes: attaching to the casing (24) an injection mold (33) including an insertion portion (33b) that is inserted to an inner side of the stator (23) and a cover portion (33c) connected to the insertion portion (33b) to cover an opening of the casing (24), the cover portion (33c) provided with an injection port (34); and injecting the sealant serving as the material of the sealing body (30) through the injection port (34) toward an end surface of the specific coil end (29a), wherein a part of the insertion portion (33b) of the injection mold (33), the part located on an inner side of the specific coil end (29a), has an outer peripheral surface which is inclined, so as to increase in diameter with close to the cover portion (33c), at a smaller angle than an angle of the inclination of the inside surface of the specific coil end (29a).

## Patentansprüche

1. Verfahren zum Herstellen eines Motors, der Folgendes aufweist: eine Motorwelle (21); einen Rotor (22), der sich um die Motorwelle (21) dreht; einen Stator (23), der um den Rotor (22) herum angeordnet ist, wobei der Stator (23) einen Statorkern (28) und eine Statorwicklung (29) hat, die um den Statorkern (28) herum gewickelt ist, wobei die Statorwicklung (29) um den Statorkern (28) in einem Zustand gewickelt ist, bei dem die Wicklungsenden (29a, 29b) an jeweiligen Seiten der Statorwicklung (29), die als umgedrehte Abschnitte an ihren jeweiligen Enden dienen, nach außen in einer axialen Richtung bis jenseits der jeweiligen Axialrichtungsendflächen des Statorkerns (28) vorragen; ein Gehäuse (24), in dem der Rotor (22) und der Stator (23) untergebracht sind; und einen Abdichtkörper (30), der in das Gehäuse (24) eingefüllt ist, um eine Gesamtheit des Stators (23) oder einen Teil des Stators (23), der die Wicklungsenden (29a, 29b) an den jeweiligen Seiten umfasst, abzudichten, wobei das Verfahren die folgenden Schritte aufweist:
einen Wicklungswickelschritt zum Wickeln der Statorwicklung (29) um den Statorkern (28);
einen Neigungsvorseheschritt zum Vorsehen einer Seitenfläche (291) an einer radialen Innenseite des spezifischen Wicklungsendes (29a) der Wicklungsenden (29a, 29b) an den jeweiligen Seiten der Statorwicklung (29), der dem Wicklungswickelschritt folgt, mit einer derartigen Neigung, dass die Seitenfläche (291) nahe zu einem Endstück eines spezifischen Wicklungsendes (29a) nach außen in einer radialen Richtung versetzt ist; und
einen Einspritzschritt zum Einspritzen eines Dichtmittels, das als ein Material des Abdichtkörpers (30) dient, von einer Seite des spezifischen Wicklungsendes (29a) in das Gehäuse, in dem der Stator, dessen Seitenfläche (291) an der radial inneren Seite des spezifischen Wicklungsendes (29a) mit der Neigung versehen worden ist, untergebracht ist,
**dadurch gekennzeichnet, dass**
der Neigungsvorseheschritt Folgendes umfasst: Versehen lediglich der Seitenfläche (291) an der radial inneren Seite des spezifischen Wicklungsendes (29a) mit der Neigung, während eine Seitenfläche (292) an der radial äußeren Seite des spezifischen Wicklungsendes (29a) parallel zu einer Motorachsenrichtung ohne Neigung gehalten wird,
wobei der Neigungsvorseheschritt Folgendes umfasst: Anwenden einer Neigungsvorseheinspanneinrichtung (32), die eine schräge Außenumfangsfläche (32a) hat, die so geneigt ist, dass ihr Durchmesser nahe zu einem Endstück der Neigungsvorseheinspanneinrichtung (32) abnimmt, um die schräge Außenumfangsfläche (32a) gegen einen Innenabschnitt des spezifischen Wicklungsendes (29a) zu drücken, während die Seitenfläche (292) des spezifischen Wicklungsendes (29a) an einer radial äußeren Seite des Stators (23) durch eine Begrenzungseinspanneinrichtung (31) gehalten wird, die gegen die Seitenfläche (292) gedrückt wird.

2. Motorherstellverfahren gemäß Anspruch 1, wobei der Abdichtschritt Folgendes umfasst: an dem Gehäuse (24) erfolgendes Anbringen einer Einspritzform (33), die einen Einführabschnitt (33b), der an einer Innenseite des Stators (23) eingeführt wird, und einen Abdeckabschnitt (33c) hat, der mit dem Einführabschnitt (33b) verbunden ist, um eine Öffnung des Gehäuses (24) zu bedecken, wobei der Abdeckabschnitt (33c) mit einem Einspritzanschluss (34) versehen ist; und Einspritzen des Abdichtmittels, das als das Material des Abdichtkörpers (30) dient, durch den Einspritzanschluss (34) zu einer Endfläche des spezifischen Wicklungsendes (29a), wobei ein Teil des Einführabschnittes (33b) der Einspritzform (33), wobei dieser Teil sich an einer Innenseite des spezifischen Wicklungsendes (29a) befindet, eine Außenumfangsfläche hat, die so geneigt ist, dass der Durchmesser nahe zu dem Abdeckabschnitt (33c) unter einem geringeren Winkel als ein Winkel der Neigung der Innenfläche des spezifischen Wicklungsendes (29a) zunimmt.

## Revendications

1. Procédé de fabrication d'un moteur qui inclut : un arbre moteur (21) ; un rotor (22) qui tourne autour de l'arbre moteur (21) ; un stator (23) disposé autour du rotor (22), le stator (23) incluant un noyau de stator (28) et une bobine de stator (29) enroulée autour du noyau de stator (28), la bobine de stator (29) étant enroulée autour du noyau de stator (28) dans un état dans lequel des extrémités de bobine (29a, 29b) sur des côtés respectifs de la bobine de stator (29) qui servent de parties inversées sur des extrémités respectives de celle-ci, font saillie vers l'extérieur dans une direction axiale au-delà des surfaces d'extrémité de direction axiale respectives du noyau de stator (28) ; un carter (24) logeant le rotor (22) et le stator (23) ; et un corps étanche (30) chargé dans le carter (24) pour rendre étanche une intégralité du stator (23) ou une partie du stator (23) incluant les extrémités de bobine (29a, 29b) sur les côtés respectifs,
le procédé comprenant :
une étape d'enroulement de bobine consistant à enrouler la bobine de stator (29) autour du noyau de stator (28) ;
une étape de fourniture d'inclinaison consistant à doter une surface latérale (291) sur un côté radialement intérieur de l'extrémité de bobine spécifique (29a) des extrémités de bobine (29a, 29b) sur les côtés respectifs de la bobine de stator (29), suivant l'étape d'enroulement de bobine, d'une inclinaison telle que la surface latérale (291) se déplace vers l'extérieur dans une direction radiale près d'un bout d'une extrémité de bobine spécifique (29a) ; et
une étape d'injection consistant à injecter un scellant qui sert de matériau du corps étanche (30), d'un côté de l'extrémité de bobine spécifique (29a), dans le carter dans lequel est logé le stator dont la surface latérale (291) sur le côté radialement intérieur de l'extrémité de bobine spécifique (29a) a été dotée de l'inclinaison,
**caractérisé en ce que**
l'étape de fourniture d'inclinaison inclut la fourniture seulement de la surface latérale (291) sur le côté radialement intérieur de l'extrémité de bobine spécifique (29a) avec l'inclinaison tout en maintenant une surface latérale (292) sur un côté radialement extérieur de l'extrémité de bobine spécifique (29a) parallèle à une direction d'axe de moteur sans inclinaison,
dans lequel l'étape de fourniture d'inclinaison inclut l'utilisation d'un gabarit de fourniture d'inclinaison (32) incluant une surface périphérique extérieure oblique (32a) inclinée de sorte à diminuer de diamètre près d'un bout du gabarit de fourniture d'inclinaison (32) pour presser la surface périphérique extérieure oblique (32a) contre une partie intérieure de l'extrémité de bobine spécifique (29a) alors que la surface latérale (292) de l'extrémité de bobine spécifique (29a) est contrainte au niveau d'un côté radialement extérieur du stator (23) par un gabarit de restriction (31) pressé contre la surface latérale (292).

2. Procédé de fabrication de moteur selon la revendication 1, dans lequel l'étape d'étanchéité inclut : l'attache au carter (24) d'un moule d'injection (33) incluant une portion d'insertion (33b) qui est insérée dans un côté intérieur du stator (23) et une portion de couvercle (33c) raccordée à la portion d'insertion (33b) pour couvrir une ouverture du carter (24), la portion de couvercle (33c) étant dotée d'un orifice d'injection (34) ; et l'injection du scellant servant de matériau du corps étanche (30) au travers de l'orifice d'injection (34) vers une surface d'extrémité de l'extrémité de bobine spécifique (29a), dans lequel une partie de la portion d'insertion (33b) du moule d'injection (33), la partie située sur un côté intérieur de l'extrémité de bobine spécifique (29a), présente une surface périphérique extérieure qui est inclinée de sorte à augmenter en diamètre près de la portion de couvercle (33c), selon un angle inférieur à un angle de l'inclinaison de la surface intérieure de l'extrémité de bobine spécifique (29a).
